# FASCICULE DE BREVET EUROPEEN

(11) **EP 2 405 151 B1**
(45) Date de publication et mention de la délivrance du brevet: **26.06.2013**
(21) Numéro de dépôt: 11172480.3
(22) Date de dépôt: 04.07.2011
(51) Int. Cl.: F16C 32/04, F16C 35/00, F16C 23/00

(54) **Palier magnétique à réglage axial et procédé de montage**
Magnetlager mit Axialregulierung, und Montageverfahren
Magnetic bearing with axial adjustment and assembly method

(30) Priorité: 08.07.2010 FR 1055551
(43) Date de publication de la demande: 11.01.2012
(73) Titulaire: SOCIETE DE MECANIQUE MAGNETIQUE, 27950 Saint Marcel (FR)
(72) Inventeur: Carrasco, Eduardo, 27920 Saint Etienne sous Bailleul (FR)
(74) Mandataire: Thévenet, Jean-Bruno

(56) Documents cités:
- DE-A1- 19 822 587
- DE-A1- 19 910 279
- US-A1- 2004 189 124

## Description

La présente invention concerne un palier magnétique à réglage axial comprenant une carcasse annulaire solidaire d'un support, une structure de stator de palier magnétique avec un fourreau annulaire de support de bobinages d'électro-aimants disposé de façon concentrique par rapport à ladite carcasse, et une armature annulaire de rotor placée de façon concentrique par rapport à la structure de stator en ménageant un entrefer avec cette dernière.

Un palier magnétique à réglage axial est connu du document DE 199 10 279 A.

L'invention concerne également un procédé de montage d'un tel palier magnétique.

Les paliers magnétiques actifs sont de plus en plus souvent utilisés dans le domaine industriel compte tenu de leurs nombreux avantages, tels que notamment une absence d'usure, de lubrification et de pollution, une vitesse de rotation élevée, un taux de vibrations réduit et une grande fiabilité même dans des conditions d'environnement difficiles.

Toutefois les paliers magnétiques requièrent un grand soin lors du montage et, en particulier, il est souvent nécessaire de positionner les différents éléments constitutifs des paliers magnétiques avec une grande précision par rapport à un bâti.

La présente invention vise à répondre à ce problème et à permettre de positionner finement, dans le sens axial, un ensemble mécanique formant palier magnétique dans une carcasse de support et de protection.

Ces buts sont atteints grâce à un palier magnétique à réglage axial comprenant une carcasse annulaire solidaire d'un support, une structure de stator de palier magnétique avec un fourreau annulaire de support de bobinages d'électro-aimants disposé de façon concentrique par rapport à ladite carcasse, et une armature annulaire de rotor placée de façon concentrique par rapport à la structure de stator en ménageant un entrefer avec cette dernière, caractérisé en ce que la carcasse annulaire comprend au moins une fente radiale associée à des moyens de serrage et une partie en retrait sur sa face tournée vers la structure de stator, la face de la carcasse annulaire tournée vers la structure de stator comprenant une surface de glissement coopérant avec une partie en regard dudit fourreau et la partie en retrait de la carcasse annulaire présentant une partie filetée coopérant avec une partie filetée d'une bague de réglage engagée dans une rainure annulaire ménagée dans la face du fourreau tournée vers la carcasse, la bague de réglage étant immobilisée dans le sens axial dans ladite rainure annulaire.

Selon une caractéristique particulière, la bague de réglage comprend des moyens de saisie pour commander les mouvements de rotation de ladite bague de réglage par rapport à la carcasse annulaire et le fourreau annulaire.

Les moyens de saisie peuvent être constitués par des parties en relief ou en creux formées dans une face frontale de la bague de réglage.

Selon divers modes particuliers de réalisation, la bague de réglage peut être réalisée en une seule partie avec ou sans fente radiale, ou peut être réalisée en deux parties avec deux fentes radiales.

Selon une caractéristique particulière, les moyens de serrage comprennent une vis exerçant un effort tangentiel sur la carcasse annulaire de part et d'autre de ladite fente radiale de la carcasse annulaire.

Selon un mode particulier de réalisation, la structure de stator est interposée entre l'armature annulaire interne de rotor et la carcasse annulaire externe.

L'invention a également pour objet un procédé de montage d'un palier magnétique à réglage axial comprenant une structure de stator de palier magnétique avec un fourreau annulaire de support de bobinages d'électro-aimants disposé de façon concentrique par rapport à une carcasse annulaire solidaire d'un support, et une armature annulaire de rotor placée de façon concentrique par rapport à la structure de stator en ménageant un entrefer avec cette dernière, caractérisé en ce qu'il comprend les étapes suivantes :
a) former dans la carcasse annulaire au moins une fente radiale associée à des moyens de serrage
b) former une surface de glissement sur la face de la carcasse annulaire tournée vers la structure de stator.
c) former une partie en retrait dans la carcasse annulaire sur la face de celle-ci tournée vers la structure de stator et munir cette partie en retrait d'un filetage,
d) former une rainure annulaire dans la face du fourreau tournée vers la carcasse,
e) insérer dans ladite rainure annulaire une bague de réglage, dimensionnée de manière à être immobilisée dans le sens axial à l'intérieur de ladite rainure annulaire et présentant un filetage coopérant avec ledit filetage de la partie en retrait,
f) faire tourner la bague de réglage par rapport au fourreau et à la carcasse annulaire pour positionner finement dans le sens axial ledit fourreau par rapport à ladite carcasse annulaire, lesdits moyens de serrage étant desserrés, et
g) après obtention du positionnement axial souhaité de la structure de stator par rapport à la carcasse annulaire, serrer lesdits moyens de serrage pour amener le diamètre interne de la carcasse annulaire à correspondre au diamètre externe du fourreau de manière à bloquer axialement et radialement la structure de stator à l'intérieur de la carcasse annulaire.

D'autres caractéristiques et avantages de l'invention ressortiront de la description suivante de modes de réalisation particuliers, donnés à titre d'exemple, en référence aux dessins annexés, sur lesquels :
- la figure 1 est une vue de face d'un exemple de palier magnétique à réglage axial selon l'invention, et
- la figure 2 est une vue en coupe selon le plan II-II de la figure 1.

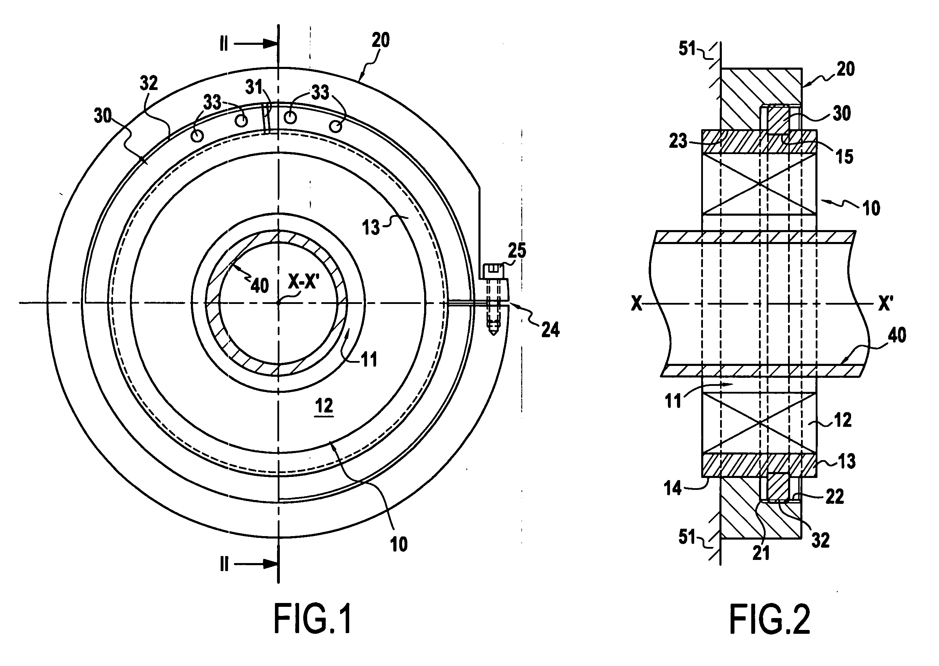

On voit sur la figure 1 un exemple de palier magnétique actif radial présentant un axe XX' et qui est équipé de moyens de positionnement axial conformément à l'invention.

Une structure de stator 10 est disposée autour d'une armature annulaire 40 de rotor, de façon concentrique autour de l'axe X'X, en ménageant un entrefer 11 entre cette armature annulaire 40 et la structure de stator 10.

La structure de stator 10 comprend un fourreau annulaire 13 destiné à supporter des bobinages 12 d'électro-aimant et à constituer une culasse en matériau ferromagnétique pour ces bobinages 12 d'électroaimant.

Le fourreau 13 est engagé dans une carcasse annulaire 20 elle-même solidaire d'un support 51. La surface externe du fourreau 13 présente une surface de glissement 14 et, au voisinage de celle-ci, une rainure périphérique 15 dans laquelle vient se loger une bague de réglage 30 circulaire qui, selon un mode particulier de réalisation, peut-être munie d'au moins une fente radiale 31 afin de lui conférer une certaine élasticité permettant l'insertion dans la rainure 15. La bague de réglage 30 est dimensionnée de manière à être ajustée aux dimensions de la rainure 15 afin d'être bloquée dans les deux sens de la direction axiale. Dans le mode particulier de réalisation précité, la bague de réglage 30 conserve, grâce à la fente radiale 31 une possibilité de glissement autour de la structure de stator 10.

La bague de réglage 30 peut comprendre plus d'une fente radiale 31 et peut par exemple être constituée de deux demi-bagues séparées par deux fentes radiales. Toutefois, selon un autre mode de réalisation possible, la bague de réglage 30 peut ne comprendre aucune fente radiale.

La bague de réglage 30, ou les différents segments constituant cette bague de réglage 30 comprennent de préférence des moyens de saisie 33 permettant à l'utilisateur de faire tourner la bague de réglage 30 autour de la structure de stator 10. Les moyens de saisie 33 peuvent être réalisés par usinage ou à l'aide de pièces rapportées dans une face frontale de la bague de réglage 30 accessible à l'utilisateur. Les moyens de saisie 33 peuvent ainsi être constitués par des parties en creux, telles que des trous ou par des parties en relief, telles que des picots, pouvant présenter une section circulaire ou polygonale par exemple.

La bague de réglage 30 est munie d"un filetage 32 sur sa surface cylindrique périphérique externe, concentrique à l'axe X'X pour coopérer avec un filetage 22 formé sur une surface cylindrique périphérique interne, concentrique à l'axe X'X, d'une partie en retrait 21 de la carcasse 20 fixée sur le support 51.

La carcasse annulaire 20 comprend une fente radiale 24 associée à des moyens de serrage 25 tels qu'une vis exerçant un effort tangentiel sur la carcasse annulaire de part et d'autre de la fente radiale 24.

La carcasse annulaire 20 comprend une partie en retrait 21 sur sa face tournée vers la structure de stator 10, cette partie en retrait 21 étant munie d'un filetage 22 comme indiqué précédemment.

La face de la carcasse annulaire 20 tournée vers la structure de stator 10 et adjacente à la partie en retrait 21 comprend une surface de glissement 23 coopérant avec la surface de glissement 14 définie sur la surface externe du fourreau 13.

Le positionnement fin dans le sens axial de l'ensemble mécanique formant la structure de stator 10 d'un palier magnétique à l'intérieur de la carcasse 20 s'effectue de la façon suivante :
La vis 25 étant dévissée pour permettre à la carcasse 20 munie de sa fente radiale 24 de présenter un léger débattement dans le sens radial, il est possible d'introduire la bague de réglage 30 dans la rainure 15 tout en mettant en prise le filetage externe 32 de la bague de réglage 30 avec le filetage interne 22 de la partie en retrait 21 de la carcasse 20.

Une fois la bague de réglage 30 engagée dans la rainure 15, avec blocage des mouvements de translation dans les deux sens dans la direction axiale, on laisse subsister un jeu donnant une possibilité de rotation de la bague de réglage 30 autour de l'axe X'X, le filetage 32 de la bague de réglage 30 étant en prise avec le filetage 22 de la carcasse 20, le cas échéant après un léger serrage incomplet de la vis 25.

Pour l'ajustement fin de la position axiale de la structure de stator 10, l'utilisateur fait tourner la bague de réglage 30 autour de l'axe X'X en utilisant les moyens de saisie 33. Pendant ce réglage, du fait de la coopération des filetages 22, 32 d'une part et des surfaces de glissement 14, 23 d'autre part, il se produit un mouvement relatif de la structure de stator 10 par rapport à la carcasse 20, dans la direction axiale X'X.

Une fois le positionnement précis obtenu, on serre la vis tangentielle 25 pour refermer la fente radiale 24 de la carcasse 20. Lors du serrage de la vis 25, le diamètre interne de la carcasse 20 se réduit jusqu'à atteindre le diamètre externe du fourreau 13 sans laisser subsister de jeu au niveau des surfaces de glissement 14, 23, ce qui provoque un blocage de la structure de stator 10 dans la carcasse à la fois dans le sens axial et dans le sens radial.

Le système de réglage est naturellement réversible, de sorte que si, après un certain temps de fonctionnement, lors d'une opération de maintenance, on constate que la position axiale de la structure de stator 10 doit être modifiée, il suffit de dévisser la vis 25 et de recommencer les opérations précédentes jusqu'à l'obtention de la nouvelle position axiale souhaitée, puis de resserrer cette vis 25 pour assurer un blocage dans la nouvelle position axiale choisie.

## Revendications

1. Palier magnétique à réglage axial comprenant une carcasse annulaire (20) solidaire d'un support (51), une structure de stator (10) de palier magnétique avec un fourreau annulaire (13) de support de bobinages (12) d'électro-aimants disposé de façon concentrique par rapport à ladite carcasse (20), et une armature annulaire (40) de rotor placée de façon concentrique par rapport à la structure de stator (10) en ménageant un entrefer (11) avec cette dernière, la carcasse annulaire (20) comprenant au moins une fente (24) radiale associée à des moyens de serrage (25) et une partie en retrait (21) sur sa face tournée vers la structure de stator (10), la face de la carcasse annulaire (20) tournée vers la structure de stator (10) comprenant une surface de glissement (23) coopérant avec une partie en regard (14) dudit fourreau (13) et la partie en retrait (21) de la carcasse annulaire (20) présentant une partie filetée (22) coopérant avec une partie filetée (32) d'une bague de réglage (30) engagée dans une rainure annulaire (15) ménagée dans la face du fourreau (13) tournée vers la carcasse (20), la bague de réglage (30) étant immobilisée dans le sens axial dans ladite rainure annulaire (15).

2. Palier selon la revendication 1, **caractérisé en ce que** la bague de réglage (30) comprend des moyens de saisie (33) pour commander les mouvements de rotation de ladite bague de réglage (30) par rapport à la carcasse annulaire (20) et le fourreau annulaire (13).

3. Palier selon la revendication 2, **caractérisé en ce que** les moyens de saisie (33) sont constitués par des parties en relief formées dans une face frontale de la bague de réglage (30).

4. Palier selon la revendication 2, **caractérisé en ce que** les moyens de saisie (33) sont constitués par des parties en creux formées dans une face frontale de la bague de réglage (30).

5. Palier selon la revendication 1, **caractérisé en ce que** la bague de réglage (30) comprend au moins une fente radiale (31).

6. Palier selon la revendication 1, **caractérisé en ce que** la bague de réglage (30) comprend deux fentes radiales (31) et est réalisée en deux parties.

7. Palier selon la revendication 1, **caractérisé en ce que** lesdits moyens de serrage (25) comprennent une vis exerçant un effort tangentiel sur la carcasse annulaire (20) de part et d'autre de ladite fente radiale (24) de la carcasse annulaire (30).

8. Palier selon la revendication 1, **caractérisé en ce que** la structure de stator (10) est interposée entre l'armature annulaire interne (40) de rotor et la carcasse annulaire externe (20).

9. Procédé de montage d'un palier magnétique à réglage axial comprenant une structure de stator (10) de palier magnétique avec un fourreau annulaire (13) de support de bobinages (12) d'électro-aimants disposé de façon concentrique par rapport à une carcasse annulaire (20) solidaire d'un support (51), et une armature annulaire (40) de rotor placée de façon concentrique par rapport à la structure de stator (10) en ménageant un entrefer (11) avec cette dernière, le procéder comprenant les étapes suivantes :
a) former dans la carcasse annulaire (20) au moins une fente (24) radiale associée à des moyens de serrage (25),
b) former une surface de glissement (23) sur la face de la carcasse annulaire (20) tournée vers la structure de stator (10),
c) former une partie en retrait (21) dans la carcasse annulaire (20) sur la face de celle-ci tournée vers la structure de stator (10) et munir cette partie en retrait (21) d'un filetage (22),
d) former une rainure annulaire (15) dans la face du fourreau (13) tournée vers la carcasse (20),
e) insérer dans ladite rainure annulaire (15) une bague de réglage (30), dimensionnée de manière à être immobilisée dans le sens axial à l'intérieur de ladite rainure annulaire (15) et: présentant un filetage (32) coopérant avec ledit filetage (22) de la partie en retrait (21),
f) faire tourner la bague de réglage (30) par rapport au fourreau (13) et à la carcasse annulaire (20) pour positionner finement dans le sens axial ledit fourreau (13) par rapport à ladite carcasse annulaire (20), lesdits moyens de serrage (25) étant desserrés, et
g) après obtention du positionnement axial souhaité de la structure de stator (10) par rapport à la carcasse annulaire (20), serrage desdits moyens de serrage (25) pour amener le diamètre interne de la carcasse annulaire (20) à correspondre au diamètre externe du fourreau (13) de manière à bloquer axialement et radialement la structure de stator (10) à l'intérieur de la carcasse annulaire (20).

## Patentansprüche

1. Magnetlager mit axialer Einstellung, umfassend ein ringförmiges Gehäuse (20), das mit einem Halter (51) fest verbunden ist, eine Magnetlager-Statorstruktur (10) mit einer ringförmigen Hülse (13) zum Halten von Wicklungen (12) von Elektromagneten, die zu dem Gehäuse (20) konzentrisch angeordnet ist, sowie einen ringförmigen Rotoranker (40), der zu der Statorstruktur (10), unter Ausbilden eines Luftspalts (11) mit letzterer, konzentrisch angeordnet ist, wobei das ringförmige Gehäuse (20) wenigstens einen radialen Schlitz (24), der Klemmitteln (25) zugeordnet ist, sowie einen zurückspringenden Teil (21) an seiner der Statorstruktur (10) zugewandten Seite umfaßt, wobei die Seite des ringförmigen Gehäuses (20), die der Statorstruktur (10) zugewandt ist, eine Gleitfläche (23) aufweist, die mit einem gegenüberliegenden Teil (14) der Hülse (13) zusammenwirkt, und wobei der zurückspringende Teil (21) des ringförmigen Gehäuses (20) einen Gewindeteil (22) umfaßt, der mit einem Gewindeteil (32) eines Einstellrings (30), welcher in eine in der dem Gehäuse (20) zugewandten Seite der Hülse (13) ausgebildete Ringnut (15) eingesteckt ist, zusammenwirkt, wobei der Einstellring (30) in der Ringnut (15) in axialer Richtung festgelegt ist.

2. Lager nach Anspruch 1, **dadurch gekennzeichnet, daß** der Einstellring (30) Erfassungsmittel (33) umfaßt, um die Drehbewegungen des Einstellrings (30) gegenüber dem ringförmigen Gehäuse (20) und der ringförmigen Hülse (13) zu steuern.

3. Lager nach Anspruch 2, **dadurch gekennzeichnet, daß** die Erfassungsmittel (33) durch in einer Stirnseite des Einstellrings (30) ausgebildete erhabene Teile gebildet sind.

4. Lager nach Anspruch 2, **dadurch gekennzeichnet, daß** die Erfassungsmittel (33) durch in einer Stirnseite des Einstellrings (30) ausgebildete vertiefte Teile gebildet sind.

5. Lager nach Anspruch 1, **dadurch gekennzeichnet, daß** der Einstellring (30) wenigstens einen radialen Schlitz (31) umfaßt.

6. Lager nach Anspruch 1, **dadurch gekennzeichnet, daß** der Einstellring (30) zwei radiale Schlitze (31) umfaßt und zweiteilig ausgebildet ist.

7. Lager nach Anspruch 1, **dadurch gekennzeichnet, daß** die Klemmittel (25) eine Schraube umfassen, die auf das ringförmige Gehäuse (20) auf beiden Seiten des radialen Schlitzes (24) des ringförmigen Gehäuses (30) eine Tangentialkraft ausübt.

8. Lager nach Anspruch 1, **dadurch gekennzeichnet, daß** die Statorstruktur (10) zwischen dem inneren ringförmigen Rotoranker (40) und dem äußeren ringförmigen Gehäuse (20) eingefügt ist.

9. Verfahren zur Montage eines Magnetlagers mit axialer Einstellung, umfassend eine Magnetlager-Statorstruktur (10) mit einer ringförmigen Hülse (13) zum Halten von Wicklungen (12) von Elektromagneten, die zu einem ringförmigen Gehäuse (20), das mit einem Halter (51) fest verbunden ist, konzentrisch angeordnet ist, sowie einen ringförmigen Rotoranker (40), der zu der Statorstruktur (10), unter Ausbilden eines Luftspalts (11) mit letzterer, konzentrisch angeordnet ist, wobei das Verfahren die folgenden Schritte umfaßt:
a) Ausbilden wenigstens eines Klemmitteln (25) zugeordneten radialen Schlitzes (24), in dem ringförmigen Gehäuse (20),
b) Ausbilden einer Gleitfläche (23) an der Seite des ringförmigen Gehäuses (20), die der Statorstruktur (10) zugewandt ist,
c) Ausbilden eines zurückspringenden Teils (21) in dem ringförmigen Gehäuse (20) an dessen der Statorstruktur (10) zugewandten Seite und Versehen dieses zurückspringenden Teils (21) mit einem Gewinde (22),
d) Ausbilden einer Ringnut (15) in der dem Gehäuse (20) zugewandten Seite der Hülse (13),
e) Einfügen, in die Ringnut (15), eines Einstellrings (30), welcher derart bemessen ist, daß er in der Ringnut (15) in axialer Richtung festgelegt ist, und der ein Gewinde (32) aufweist, das mit dem Gewinde (22) des zurückspringenden Teils (21) zusammenwirkt,
f) Drehen des Einstellrings (30) gegenüber der Hülse (13) und dem ringförmigen Gehäuse (20), um die Hülse (13) gegenüber dem ringförmigen Gehäuse (20) in axialer Richtung fein zu positionieren, wobei die Klemmittel (25) gelöst sind, und
g) nach Erreichen der gewünschten axialen Positionierung der Statorstruktur (10) gegenüber dem ringförmigen Gehäuse (20), Festziehen der Klemmittel (25), um den Innendurchmesser des ringförmigen Gehäuses (20) dazu zu bringen, daß er dem Außendurchmesser der Hülse (13) entspricht, um die Statorstruktur (10) in dem ringförmigen Gehäuse (20) axial und radial festzulegen.

## Claims

1. An axially adjustable magnetic bearing comprising an annular body (20) secured to a support (51), a magnetic bearing stator structure (10) having an annular sheath (13) for supporting electromagnet windings (12) placed concentrically relative to said body (20), and an annular rotor armature (40) placed concentrically relative to the stator structure (10), leaving an airgap (11) relative thereto, the annular body (20) including at least one radial slot (24) associated with clamping means (25), and including a set-back portion (21) in its face facing towards the stator structure (10), the face of the annular body (20) facing towards the stator structure (10) including a sliding surface (23) that co-operates with a facing portion (14) of said sheath (13), and the set-back portion (21) of the annular body (20) presenting a threaded portion (22) that co-operates with a threaded portion (32) of an adjustment ring (30) engaged in an annular groove (15) formed in the face of the sheath (13) that faces towards the body (20), the adjustment ring (30) being prevented from moving in the axial direction in said annular groove (15).

2. A bearing according to claim 1, **characterized in that** the adjustment ring (30) includes grip means (33) for controlling movement in rotation of said adjustment ring (30) relative to the annular body (20) and to the annular sheath (13).

3. A bearing according to claim 2, **characterized in that** the grip means (33) are constituted by portions in relief formed on a front face of the adjustment ring (30).

4. A bearing according to claim 2, **characterized in that** the grip means (33) are constituted by hollow portions formed in a front face of the adjustment ring (30).

5. A bearing according to claim 1, **characterized in that** the adjustment ring (30) includes at least one radial slot (31).

6. A bearing according to claim 1, **characterized in that** the adjustment ring (30) includes two radial slots (31) and is made as two portions.

7. A bearing according to claim 1, **characterized in that** said clamping means (25) comprise a screw exerting a tangential force on the annular body (20) on either side of said radial slot (24) in the annular body (30).

8. A bearing according to claim 1, **characterized in that** the stator structure (10) is interposed between the inner annular rotor armature (40) and the outer annular body (20).

9. A method of mounting an axially-adjustable magnetic bearing comprising a magnetic bearing stator structure (10) with an annular sheath (13) supporting electromagnet windings (12) placed concentrically relative to an annular body (20) secured to a support (51), and an annular rotor armature (40) placed concentrically relative to the stator structure (10), while leaving an airgap (11) relative thereto, the method comprising the following steps:
a) forming at least one radial slot (24) associated with clamping means (25) in the annular body (20);
b) forming a sliding surface (23) on the face of the annular body (20) that faces towards the stator structure (10) ;
c) forming a set-back portion (21) in the annular body (20) in the face thereof that faces towards the stator structure (10) and providing said set-back portion (21) with a thread (22);
d) forming an annular groove (15) in the face of the sheath (13) that faces towards the body (20);
e) inserting an adjustment ring (30) in said annular groove (15), the ring being dimensioned in such a manner as to be prevented from moving in the axial direction inside said annular groove (15) and presenting a thread (32) that co-operates with said thread (22) of the set-back portion (21);
f) turning the adjustment ring (30) relative to the sheath (13) and to the annular body (20) in order to position said sheath (13) finely in the axial direction relative to said annular body (20), while said clamping means (25) are unclamped; and
g) after the desired axial position has been obtained for the stator structure (10) relative to the annular body (20), clamping said clamping means (25) to cause the inside diameter of the annular body (20) to correspond to the outside diameter of the sheath (13) so as to prevent the stator structure (10) from moving axially or radially inside the annular body (20).
